# EUROPEAN PATENT SPECIFICATION

(11) **EP 4 557 133 B1**
(45) Date of publication and mention of the grant of the patent: **01.04.2026**
(21) Application number: 23213979.0
(22) Date of filing: 04.12.2023
(51) Int. Cl.: G06F 21/44, H04L 9/40, H04W 12/50

(54) **COMMUNICATION SYSTEM, REMOTE TERMINAL UNIT, AND AUTHENTICATION METHOD THEREOF**
KOMMUNIKATIONSSYSTEM, FERNENDGERÄT UND AUTHENTIFIZIERUNGSVERFAHREN DAFÜR
SYSTÈME DE COMMUNICATION, UNITÉ DE TERMINAL À DISTANCE ET PROCÉDÉ D'AUTHENTIFICATION ASSOCIÉ

(30) Priority: 15.11.2023 TW 112144033
(43) Date of publication of application: 21.05.2025
(73) Proprietor: Moxa Inc., 242032 New Taipei City (TW)
(72) Inventor: LIANG, Chang-Wei, 242032 New Taipei City (TW); Yi-Wei, CHAO, 242032 New Taipei City (TW)
(74) Representative: Kurig, Thomas

(56) References cited:
- EP-B1- 2 185 065
- US-A1- 2018 152 837

## Description

### BACKGROUND

### Technical Field

The disclosure relates to a device, and in particular to a communication system, a remote terminal unit, and an authentication method thereof.
US 2018/152837 Al discloses systems and methods for the wireless pairing of a personal health device PHD with a computing device. The PHD communicates a private key to the computing device via a first communication medium. The PHD receives from the computing device via a second wireless communication medium pairing information including the private key. The PHD can then establish a secure communication channel with the computing device by pairing the PHD to the computing device.
EP 2 185 065 B1 discloses a portable source medical device determining communication links of a network presently available to effect communications with a target component when the source medical device is at each of a multiplicity of geographical locations. A profile is generated comprising information about each available communication link and attributes associated with each available communication link for each geographical location. When the source medical device is at a particular geographical location, a profile associated with the particular geographical location is accessed and a network connection is established between the source medical device and the target component using a communication link associated with the particular profile. Medical information is transferred between the source medical device and the target component via the communication link associated with the particular profile.

### Description of Related Art

In order to prevent the remote terminal unit (RTU) from being attacked by malicious programs or stealing data, how to ensure that the external input/output module is a trusted device is currently an important issue in the field. Although various communication security protocols have been developed in the communications field, effective authentication between devices still cannot be achieved, and whether the connected device is counterfeited and the data is stolen or modified also cannot be effectively verified.

### SUMMARY

The present invention is defined in the appended claims. The following disclosure serves a better understanding of the present invention. The disclosure provides a communication system, a remote terminal unit, and an authentication method thereof, which can effectively ensure that an external input/output module is a trusted device.

A remote terminal unit of the disclosure includes a processing module. The processing module includes a first processing unit and a first storage unit. The first storage unit is coupled to the first processing unit. In response to a trigger unit being enabled, the first processing unit operates in a provision mode to allow an input/output module and the processing module to establish trust. In response to the trigger unit being disabled, the first processing unit operates in a running mode to prohibit another input/output module that has not yet established trust from connecting with the processing module.

An authentication method of the disclosure is adapted to a remote terminal unit. The remote terminal unit includes a processing module. The authentication method includes the following steps. In response to a trigger unit being enabled, a first processing unit of the processing module operates in a provision mode to allow an input/output module and the processing module to establish trust. In response to the trigger unit being disabled, the first processing unit of the processing module operates in a running mode to prohibit another input/output module that has not yet established trust from connecting with the processing module.

A communication system of the disclosure includes a remote terminal unit and an extension device. The remote terminal unit includes a processing module. The extension device includes an input/output module and is coupled to the remote terminal unit. In response to a trigger unit of the processing module being enabled, the processing module operates in a provision mode to allow the input/output module and the processing module to establish trust. In response to the trigger unit being disabled, the processing module operates in a running mode to prohibit another input/output module that has not yet established trust from connecting with the processing module.

Based on the above, the communication system, the remote terminal unit, and the authentication method thereof can effectively establish trust with the input/output module.

In order for the features and advantages of the disclosure to be more comprehensible, the following specific embodiments are described in detail in conjunction with the drawings.

### BRIEF DESCRIPTION OF THE DRAWINGS

FIG. 1 is a schematic diagram of a communication system according to an embodiment of the disclosure.
FIG. 2 is a schematic diagram of a processing module and an input/output module according to an embodiment of the disclosure.
FIG. 3 is a flowchart of an authentication method of a remote terminal unit according to an embodiment of the disclosure.
FIG. 4 is a schematic diagram of initialization according to an embodiment of the disclosure.
FIG. 5 is a schematic diagram of a provision mode according to an embodiment of the disclosure.
FIG. 6 is a flowchart of obtaining certificates of each other according to an embodiment of the disclosure.
FIG. 7 is a schematic diagram of a running mode according to an embodiment of the disclosure.
FIG. 8 is a flowchart of a handshaking procedure according to an embodiment of the disclosure.

### DESCRIPTION OF THE EMBODIMENTS

Reference will now be made in detail to the exemplary embodiments of the disclosure, examples of which are illustrated in the drawings. Wherever possible, the same reference numerals are used in the drawings and the description to refer to the same or similar parts.

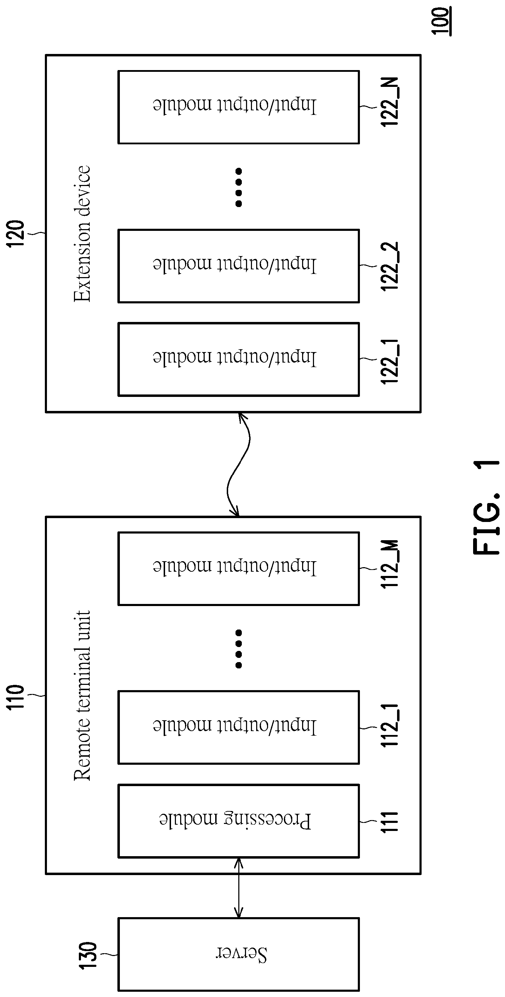

FIG. 1 is a schematic diagram of a communication system according to an embodiment of the disclosure. Referring to FIG. 1, a communication system 100 includes a remote terminal unit 110, an extension device 120, and a server 130. The remote terminal unit 110 includes a processing module 111 and multiple input/output (I/O) modules 112_1 to 112_M, where M is a positive integer. The remote terminal unit 110 may be coupled to the extension device 120 through a wired manner (for example, through a cable). The remote terminal unit 110 and the extension device 120 may be respectively disposed in different application fields with a considerable distance, but the disclosure is not limited thereto. The extension device 120 includes other input/output modules 122_1 to 122_N, where N is a positive integer. The extension device 120 may also be another remote terminal unit. The remote terminal unit 110 may be used to implement relevant applications of monitoring, control, or data collection.

In the embodiment, the processing module 111 may be used to manage, control, or monitor the input/output modules 112_1 to 112_M and 122_1 to 122_N and is connected to the server 130 through a wired or wireless manner. The processing module 111 may collect information respectively provided by the input/output modules 112_1 to 112_M and 122_1 to 122_N or send relevant information to the input/output modules 112_1 to 112_M and 122_1 to 122_N.

In the embodiment, the processing module 111 may include relevant processing and computing circuits including, for example, a central processing unit (CPU), but the disclosure is not limited thereto. The input/output modules 112_1 to 112_M and 122_1 to 122_N may respectively be different types of sensors, Internet of Things (IoT) devices, valve units, control units, and similar input/output units, but the disclosure is not limited thereto. In the embodiment, the input/output modules 112_1 to 112_M and 122_1 to 122_N may have a hot swapping function to be selectively installed into the remote terminal unit 110 or the extension device 120 when the remote terminal unit 110 (that is, the processing module 111) is in a running mode according to different usage states or selectively removed from the remote terminal unit 110 or the extension device 120.

Specifically, assuming that the input/output modules 112_1 to 112_M and 122_1 to 122_N and the processing module 111 have not yet established trust, when any one of the input/output modules 112_1 to 112 _M and 122_1 to 122_N is temporarily installed into the remote terminal unit 110 or the extension device 120, the processing module 111 may establish trust with the one. Moreover, after a certain input/output module has established trust with the processing module 111 of the remote terminal unit 110, when the input/output module is installed into the remote terminal unit 110 or the extension device 120 at any time, the processing module 111 may automatically establish connection with the input/output module. In contrast, when the input/output module that has not established trust with the processing module 111 is installed into the remote terminal unit 110 or the extension device 120, the processing module 111 may effectively and immediately identify to directly reject the connection of the input/output module that has not established trust with the processing module 111.

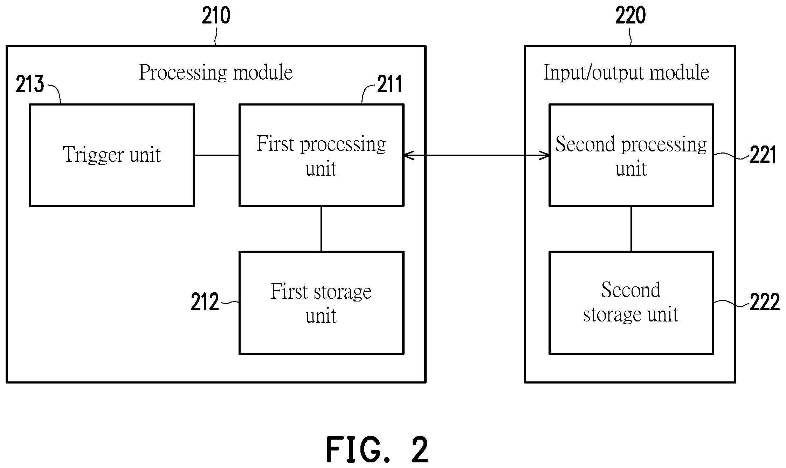

FIG. 2 is a schematic diagram of a processing module and an input/output module according to an embodiment of the disclosure. Referring to FIG. 2, the processing module 111 of FIG. 1 may be implemented as a processing module 210 of the embodiment, and any of the input/output modules 112_1 to 112_M and 122_1 to 122_N of FIG. 1 may also be implemented as an input/output module 220 of the embodiment. In the embodiment, the processing module 210 includes a first processing unit 211, a first storage unit 212, and a trigger unit 213. The first processing unit 211 is coupled to the first storage unit 212 and the trigger unit 213. The input/output module 220 includes a second processing unit 221 and a second storage unit 222.

In the embodiment, the first processing unit 211 and the second processing unit 221 may respectively be, for example, a central processing unit (CPU), a graphics processing unit (GPU), other programmable general-purpose or specific-purpose microprocessors, digital signal processors (DSPs), programmable controllers, application specific integrated circuits (ASICs), programmable logic devices (PLDs), other similar processing units, or a combination of the units. In the embodiment, the first storage unit 212 and the second storage unit 222 may include, for example, flash memories, non-volatile random access memories (NVRAMs).

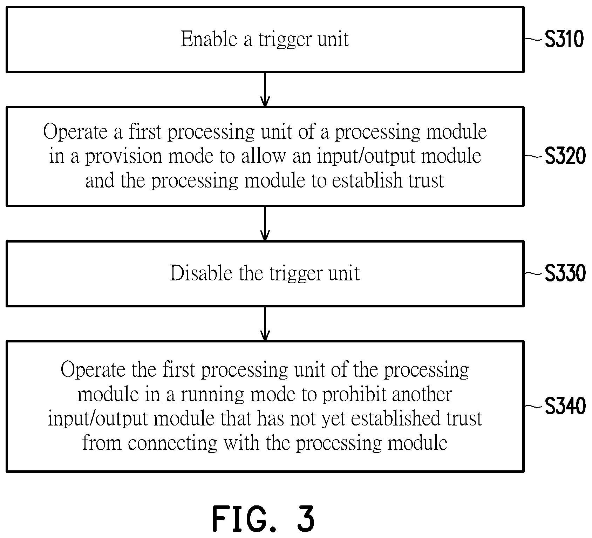

FIG. 3 is a flowchart of an authentication method of a remote terminal unit according to an embodiment of the disclosure. Referring to FIG. 2 and FIG. 3, the processing module 210 may perform Steps S310 to S340 below. In Step S310, the trigger unit 213 may be enabled (or triggered). In Step S320, in response to the trigger unit 213 being enabled, the first processing unit 211 of the processing module 210 may operate in a provision mode to allow the input/output module 220 and the processing module 210 to establish trust. In Step S330, the trigger unit 213 may be disabled. In Step S340, in response to the trigger unit 213 being disabled, the first processing unit 211 of the processing module 210 may operate in a running mode to prohibit another input/output module that has not yet established trust from connecting with the processing module 210. In the running mode, the processing module 210 may communicate and transmit data with the input/output module 220 that has established trust.

In the embodiment, the trigger unit 213 is a physical button and is disposed in the processing module 210. In this regard, the remote terminal unit 110 shown in FIG. 1 may be, for example, deployed in a server room with high security. Alternatively, in an embodiment, the trigger unit 213 may be physically deployed in a facility with high security through external wiring to enhance protection through the server room with high security, but the disclosure is not limited thereto. In another embodiment, the trigger unit 213 may also be a virtual button and may be remotely operated to be enabled or disabled, for example, by a remote network interface or a network management tool.

Specifically, when the input/output module 220 is installed into the remote terminal unit 110 or the extension device 120 as shown in FIG. 1, since trust has not yet been established between the processing module 210 and the input/output module 220, the processing module 210 first prohibits the input/output module 220 from connecting with the processing module 210. Then, when a user enables the trigger unit 213 (by, for example, manually triggering the physical button or remotely operating through the virtual button), the processing module 210 and the input/output module 220 start to establish trust. In this way, the processing module 210 may implement a communication protection mechanism with high security, and in the case where the input/output module 220 is hot swapped, trust may be dynamically established according to an operation by the user. Moreover, how the processing module 210 establishes the trusted input/output module 220 will be described in detail in the following embodiments.

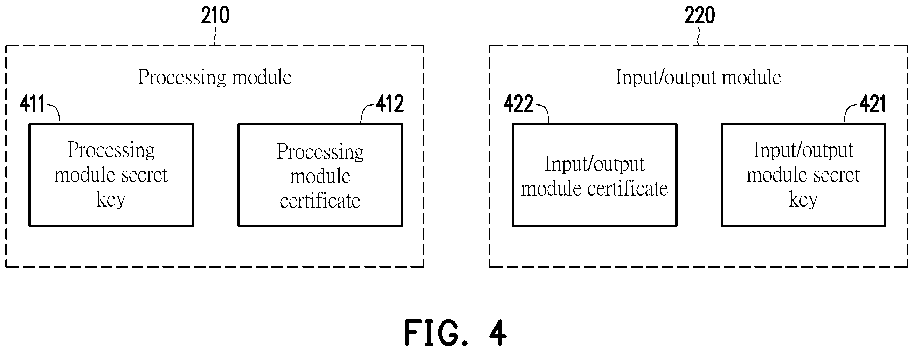

FIG. 4 is a schematic diagram of initialization according to an embodiment of the disclosure. Referring to FIG. 2 and FIG. 4, during a device initialization stage, the processing module 210 may establish a unique processing module secret key (private key) 411 and a unique processing module certificate 412, and store the processing module secret key 411 and the processing module certificate 412 into the first storage unit 212. The input/output module 220 may establish a unique input/output module secret key (private key) 421 and a unique input/output module certificate 422, and store the input/output module secret key 421 and the input/output module certificate 422 into the second storage unit 222. It should be noted that the processing module 210 and the input/output module 220 may respectively establish a random secret key and certificate, but the secret keys and the certificates established by different modules are all unique (that is, not repeated). In the embodiment, the processing module 210 may, for example, store the processing module secret key 411 into a secure storage space of the first storage unit 212, such as a specific area or a hardware security module (HSM) of a memory, but the disclosure is not limited thereto. The input/output module 220 may also store the input/output module secret key 421 into a secure storage space of the second storage unit 222.

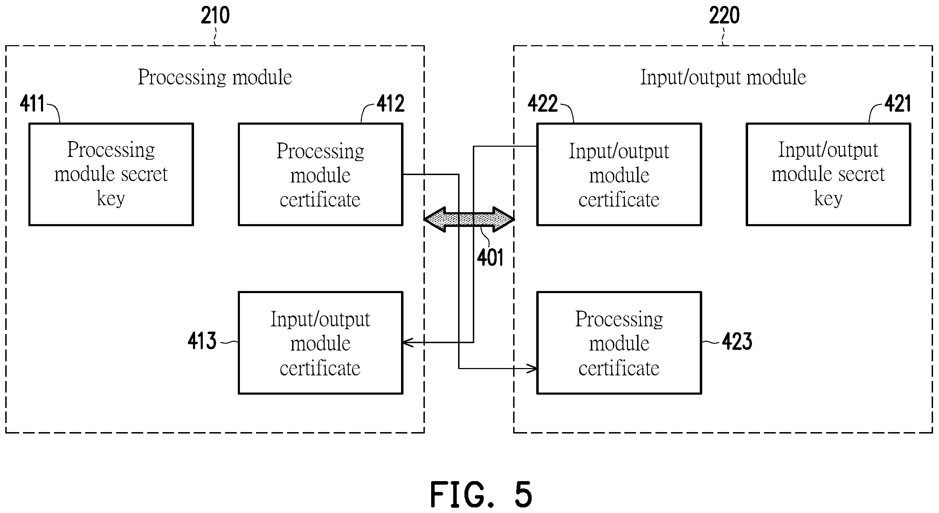

FIG. 5 is a schematic diagram of a provision mode according to an embodiment of the disclosure. Referring to FIG. 2 and FIG. 5, after the device initialization, when the trigger unit 213 is enabled, the first processing unit 211 of the processing module 210 operates in the provision mode. In the embodiment, the first processing unit 211 may send a notification signal to the input/output module 220, so that the processing module 210 and the input/output module 220 may obtain certificates of each other. The first processing unit 211 may send the notification signal to the input/output module 220 through a link layer discovery protocol (LLDP). In this regard, the notification signal may include organization-specific information of the link layer discovery protocol.

For example, the first processing unit 211 may adopt a custom LLDP type, such as an LLDP type 127, to configure relevant parameters in the notification signal. In other words, the data format of the notification signal may comply with the LLDP type 127, wherein the data format may include a destination address (DA), a source address (SA), an Ether type, a chassis identification (ID), a port ID, time to live (TTL), optional type-length-value (TLV), and end of LLDP data unit (DU) TLV. In this regard, the chassis ID, the port ID, the time to live, the optional TLV, and the end of LLDPDU TLV may have variable data lengths, and the first processing unit 211 may encrypt relevant data about the provision mode based on the basic TLV data format into the above data fields. In this way, when the second processing unit 221 of the input/output module 220 receives the notification signal with the data format, the second processing unit 221 may confirm that the first processing unit 211 operates in the provision mode and synchronously executes the provision mode.

In the embodiment, when the processing module 210 has notified the input/output module 220 to enter the provision mode, the processing module 210 and the input/output module 220 may obtain the certificates of each other. In this regard, the processing module 210 and the input/output module 220 may obtain the certificates of each other based on a mutual transport layer security (MTLS) communication protocol to establish trust, but the disclosure is not limited thereto. After the processing module 210 and the input/output module 220 establish trust, a communication connection 401 may be established. In the provision mode, the processing module 210 and the input/output module 220 may trust data transmitted by a handshake between the processing module 210 and the input/output module 220.

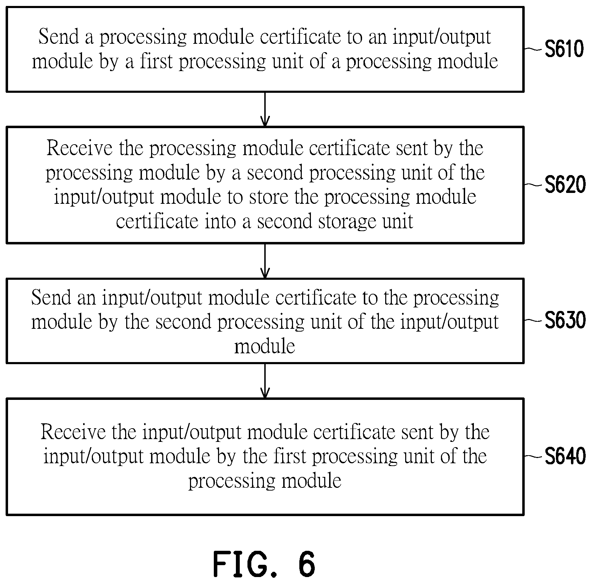

FIG. 6 is a flowchart of obtaining certificates of each other according to an embodiment of the disclosure. Referring to FIG. 2, FIG. 5, and FIG. 6, the processing module 210 and the input/output module 220 may execute Steps S610 to S640 below. In Step S610, in the provision mode, the first processing unit 211 of the processing module 210 may send the processing module certificate 412 to the input/output module 220. In Step S620, the second processing unit 221 of the input/output module 220 may receive the processing module certificate 412 sent by the processing module 210 to store the processing module certificate 412 into the second storage unit 222, that is, processing module certificate 423 in FIG. 5. In Step S630, the second processing unit 221 of the input/output module 220 may send the input/output module certificate 422 to the processing module 210. In Step S640, the first processing unit 211 of the processing module 210 may receive the input/output module certificate 422 sent by the input/output module 220 to store the input/output module certificate 422 into the first storage unit 212, that is, input/output module certificate 413 in FIG. 5.

It is worth noting that the processing module 210 may also store multiple different input/output module certificates from different input/output modules into the second storage unit 222. Moreover, when the processing module 210 receives a new input/output module certificate sent again by an input/output module that has recorded a certificate, the processing module 210 may copy the new input/output module certificate into the first storage unit 212.

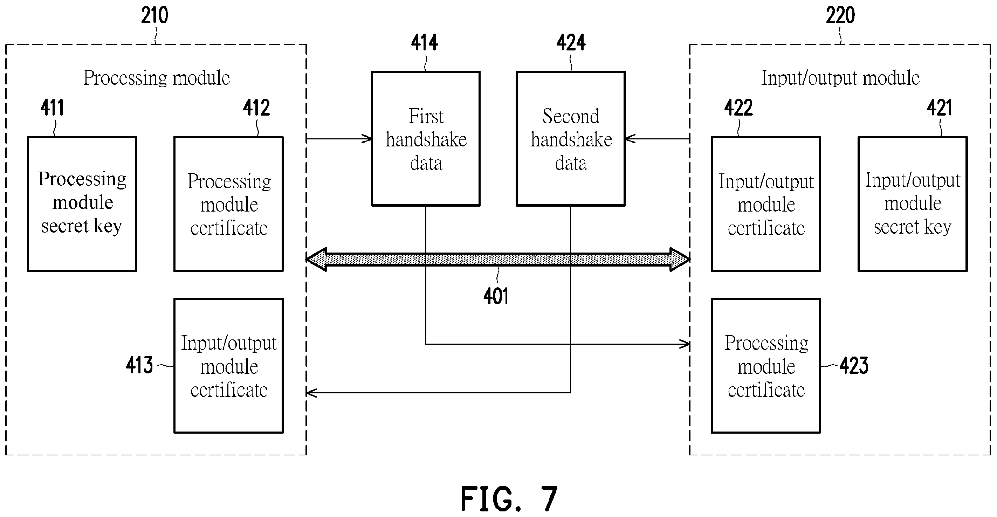

FIG. 7 is a schematic diagram of a running mode according to an embodiment of the disclosure. Referring to FIG. 2 and FIG. 7, when the trigger unit 213 is disabled, the first processing unit 211 of the processing module 210 operates in the running mode. In the embodiment, certificate verification may be performed between the processing module 210 and the input/output module 220 based on a mutual transport layer security protocol. In this regard, the processing module 210 and the input/output module 220 perform handshaking to verify whether certificates of each other and respective pre-saved certificate pass the verification to establish the communication connection 401. In the embodiment, the manner of verifying whether the certificates of each other are the same as the respective pre-saved certificates may be, for example, by performing asymmetric key signature verification.

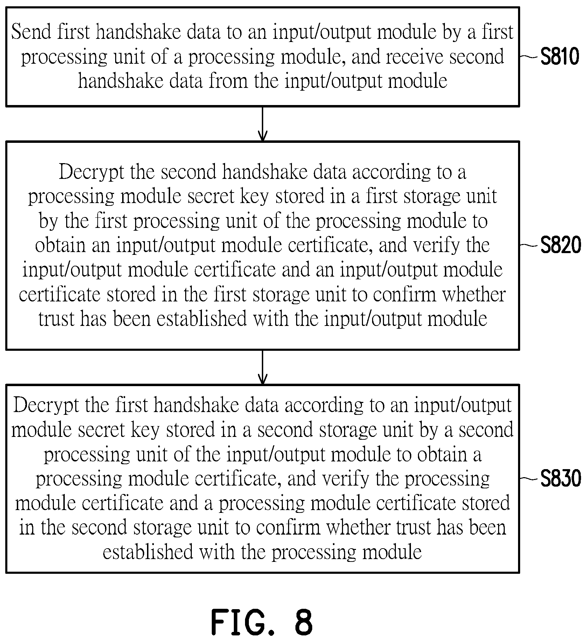

FIG. 8 is a flowchart of a handshaking procedure according to an embodiment of the disclosure. Referring to FIG. 2, FIG. 5, and FIG. 6, the processing module 210 and the input/output module 220 may execute Steps S810 to S830 below. In Step S810, the first processing unit 211 of the processing module 210 may send first handshake data 414 to the input/output module 220, and receive second handshake data 424 from the input/output module 220. The first handshake data 414 may include the processing module certificate 412. The second handshake data 424 may include the input/output module certificate 422.

In Step S820, the first processing unit 211 of the processing module 210 may decrypt the second handshake data 424 according to the processing module secret key 411 stored in the first storage unit 212 to obtain the input/output module certificate 422, and verify the input/output module certificate 422 and the input/output module certificate 413 stored in the first storage unit 212 to confirm whether trust has been established with the input/output module 220. The first storage unit 212 of the processing module 210 may store multiple certificates corresponding to different input/output modules, and the first processing unit 211 of the processing module 210 may perform certificate search and verification operations according to the input/output module certificate 422. In this regard, if the input/output module certificate 422 and the input/output module certificate 413 pass the verification, the first processing unit 211 confirms that the input/output module 220 is a trusted device and may establish the communication connection 401. On the contrary, if the input/output module certificate 422 and the input/output module certificate 413 do not pass the verification, the first processing unit 211 prohibits (or rejects) the connection of the input/output module 220 with the processing module 210.

In Step S830, the second processing unit 221 of the input/output module 220 may decrypt the first handshake data 414 according to the input/output module secret key 421 stored in the second storage unit 222 to obtain the processing module certificate 412, and verify the processing module certificate 412 and the processing module certificate 423 stored in the second storage unit 222 to confirm whether trust has been established with the processing module 210. In this regard, if the processing module certificate 412 and the processing module certificate 423 pass the verification, the second processing unit 221 confirms that the processing module 210 is a trusted device and may establish the communication connection 401. In this way, the processing module 210 may communicate with the input/output module 220 with successfully obtained certificates of each other in the previous provision mode and may reject the connection of other input/output modules without successfully obtained certificates of each other.

In summary, the communication system, the remote terminal unit, and the authentication method of the disclosure can determine whether to establish trust with the hot swapped input/output module through operating the trigger unit with high security and can effectively ensure that the input/output module communicating with the processing module is a trusted device.

## Claims

1. A remote terminal unit (110), comprising:
a processing module (111, 210), comprising:
a first processing unit (211); and
a first storage unit (212), coupled to the first processing unit (211),
wherein in response to a trigger unit (213) being enabled, the first processing unit (211) operates in a provision mode to allow an input/output module (112_1 to 112_M, 122_1 to 122_N, and 220) and the processing module (111, 210) to establish trust,
the remote terminal unit (110) being **characterized in that**, in response to the trigger unit (213) being disabled, the first processing unit (211) operates in a running mode to prohibit another input/output module that has not yet established trust from connecting with the processing module (111, 210),
and **in that** the trigger unit (213) is disposed in the processing module (111, 210).

2. The remote terminal unit (110) according to claim 1, wherein in response to the first processing unit (211) operating in the provision mode, the first processing unit (211) sends a notification signal to the input/output module (112_1 to 112_M, 122_1 to 122_N, and 220), so that the processing module (111, 210) and the input/output module (112_1 to 112_M, 122_1 to 122_N, and 220) obtain certificates of each other,
wherein the processing module (111, 210) and the input/output module (112_1 to 112_M, 122_1 to 122_N, and 220) obtain the certificates of each other based on a mutual transport layer security communication protocol to establish trust.

3. The remote terminal unit (110) according to claim 2, wherein the first processing unit (211) sends the notification signal to the input/output module (112_1 to 112_M, 122_1 to 122_N, and 220) through a link layer discovery protocol (LLDP),
wherein the notification signal comprises organization-specific information of the link layer discovery protocol.

4. The remote terminal unit (110) according to claim 2 or 3, wherein in response to the processing module (111, 210) and the input/output module (112_1 to 112_M, 122_1 to 122_N, and 220) obtaining the certificates of each other, the first processing unit (211) sends a processing module certificate (412) to the input/output module (112_1 to 112_M, 122_1 to 122_N, and 220), and receives an input/output module certificate (413) sent by the input/output module (112_1 to 112_M, 122_1 to 122_N, and 220) to store the input/output module certificate (413) into the first storage unit (212), and a second processing unit (221) of the input/output module (112_1 to 112_M, 122_1 to 122_N, and 220) receives the processing module certificate (412) sent by the processing module (111, 210) to store the processing module certificate (412) into a second storage unit (222) of the input/output module (112_1 to 112_M, 122_1 to 122_N, and 220).

5. The remote terminal unit (110) according to claim 4, wherein in response to the first processing unit (211) operating in the running mode, the first processing unit (211) sends first handshake data (414) to the input/output module (112_1 to 112_M, 122_1 to 122_N, and 220) and receives second handshake data (424) from the input/output module (112_1 to 112_M, 122_1 to 122_N, and 220),
wherein the first processing unit (211) decrypts the second handshake data (424) according to a first secret key stored in the first storage unit (212), and verifies with the input/output module certificate (422) stored in the first storage unit (212) to confirm whether a communication connection (401) is established with the input/output module (112_1 to 112_M, 122_1 to 122_N, and 220),
wherein the second processing unit (221) of the input/output module (112_1 to 112_M, 122_1 to 122_N, and 220) decrypts the first handshake data (414) according to a second secret key stored in the second storage unit (222), and verifies with the processing module certificate (423) stored in the second storage unit (222) to confirm whether the communication connection (401) is established with the processing module (111, 210).

6. The remote terminal unit (110) according to claim 1, wherein the trigger unit (213) is a physical button.

7. The remote terminal unit (110) according to claim 1, wherein the trigger unit (213) is a virtual button and is remotely enabled or disabled by a remote network interface or a network management tool.

8. The remote terminal unit (110) according to any one of claims 1 to 7, wherein the remote terminal unit (110) further comprises the input/output module (112_1 to 112_M, 122_1 to 122_N, and 220).

9. The remote terminal unit (110) according to any one of claims 1 to 8, wherein the input/output module (122_1 to 122_N) is disposed in an extension device (120).

10. An authentication method of a remote terminal unit (110), wherein the remote terminal unit (110) comprises a processing module (111, 210), the authentication method comprising:
in response to a trigger unit (213) being enabled, operating a first processing unit (211) of the processing module (111, 210) in a provision mode to allow an input/output module (112_1 to 112_M, 122_1 to 122_N, and 220) and the processing module (111, 210) to establish trust; and
the method being **characterized in that**, in response to the trigger unit (213) being disabled, operating the first processing unit (211) of the processing module (111, 210) in a running mode to prohibit another input/output module that has not yet established trust from connecting with the processing module (111, 210),
and **in that** the trigger unit (213) is disposed in the processing module (111, 210).

11. The authentication method according to claim 10, wherein the step of operating the first processing unit (211) of the processing module (111, 210) in the provision mode comprises:
in response to the first processing unit (211) operating in the provision mode, sending a notification signal to the input/output module (112_1 to 112_M, 122_1 to 122_N, and 220) by the first processing unit (211), so that the processing module (111, 210) and the input/output module (112_1 to 112_M, 122_1 to 122_N, and 220) obtain certificates of each other,
wherein the processing module (111, 210) and the input/output module (112_1 to 112_M, 122_1 to 122_N, and 220) obtain the certificates of each other based on a mutual transport layer security communication protocol to establish trust.

12. The authentication method according to claim 11, wherein the first processing unit (211) sends the notification signal to the input/output module (112_1 to 112_M, 122_1 to 122_N, and 220) through a link layer discovery protocol, wherein the notification signal comprises organization-specific information of the link layer discovery protocol.

13. The authentication method according to claim 12, wherein the step of the processing module (111, 210) and the input/output module (112_1 to 112_M, 122_1 to 122_N, and 220) obtaining the certificates of each other comprises:
sending a processing module certificate (412) to the input/output module (112_1 to 112_M, 122_1 to 122_N, and 220) by the first processing unit (211) of the processing module (111, 210);
receiving the processing module certificate (412) sent by the processing module (111, 210) by a second processing unit (221) of the input/output module (112_1 to 112_M, 122_1 to 122_N, and 220) to store the processing module certificate (412) into a second storage unit (222) of the input/output module (112_1 to 112_M, 122_1 to 122_N, and 220);
sending an input/output module certificate (413) to the processing module (111, 210) by the second processing unit (221) of the input/output module (112_1 to 112_M, 122_1 to 122_N, and 220); and
receiving the input/output module certificate (422) sent by the input/output module (112_1 to 112_M, 122_1 to 122_N, and 220) by the first processing unit (211) of the processing module (111, 210) to store the input/output module certificate (422) into a first storage unit (212) of the processing module (111, 210).

14. The authentication method according to claim 13, wherein in response to the first processing unit (211) operating in the running mode, the authentication method further comprises:
sending first handshake data (414) to the input/output module (112_1 to 112_M, 122_1 to 122_N, and 220) by the first processing unit (211) of the processing module (111, 210), and receiving second handshake data (424) from the input/output module (112_1 to 112_M, 122_1 to 122_N, and 220); and
decrypting the second handshake data (424) according to a first secret key stored in the first storage unit (212) by the first processing unit (211) of the processing module (111, 210), and verifying with the input/output module certificate (422) stored in the first storage unit (212) to confirm whether a communication connection (401) is established with the input/output module (112_1 to 112_M, 122_1 to 122_N, and 220); and
decrypting the first handshake data (414) according to a second secret key stored in the second storage unit (222) by the second processing unit (221) of the input/output module (112_1 to 112_M, 122_1 to 122_N, and 220), and verifying with the processing module certificate (423) stored in the second storage unit (222) to confirm whether the communication connection (401) is established with the processing module (111, 210).

15. A communication system (100), comprising:
a remote terminal unit (110) according to any one of claims 1 to 9, comprising a processing module (111, 210); and
an extension device (120), comprising an input/output module (112_1 to 112_M, 122_1 to 122_N, and 220) and coupled to the remote terminal unit (110),
wherein in response to a trigger unit (213) of the processing module (111, 210) being enabled, the processing module (111, 210) operates in a provision mode to allow the input/output module (112_1 to 112_M, 122_1 to 122_N, and 220) and the processing module (111, 210) to establish trust,
the communication system (100) being **characterized in that**, in response to the trigger unit (213) being disabled, the processing module (111, 210) operates in a running mode to prohibit another input/output module (112_1 to 112_M, 122_1 to 122_N, and 220) that has not yet established trust from connecting with the processing module (111, 210) ,
and that the trigger unit (213) is disposed in the processing module (111, 210).

## Patentansprüche

1. Fernendgeräteinheit (110), umfassend:
ein Verarbeitungsmodul (111, 210), umfassend:
eine erste Verarbeitungseinheit (211); und
eine erste Speichereinheit (212), die mit der ersten Verarbeitungseinheit (211) gekoppelt ist,
wobei, als Reaktion auf Aktivierung einer Auslöseeinheit (213), die erste Verarbeitungseinheit (211) in einem Bereitstellungsmodus arbeitet, um einem Eingabe-/Ausgabemodul (112_1 bis 112_M, 122_1 bis 122_N, und 220) und dem Verarbeitungsmodul (111, 210) zu ermöglichen, Vertrauen aufzubauen,
wobei die Fernendgeräteinheit (110) **dadurch gekennzeichnet ist, dass**, als Reaktion auf die Deaktivierung der Auslöseeinheit (213), die erste Verarbeitungseinheit (211) in einem Betriebsmodus arbeitet, um einem anderen Eingabe-/Ausgabemodul, das noch kein Vertrauen aufgebaut hat, zu verbieten, sich mit dem Verarbeitungsmodul (111, 210) zu verbinden,
und dass die Auslöseeinheit (213) in dem Verarbeitungsmodul (111, 210) angeordnet ist.

2. Fernendgeräteinheit (110) nach Anspruch 1, wobei als Reaktion darauf, dass die erste Verarbeitungseinheit (211) im Bereitstellungsmodus arbeitet, die erste Verarbeitungseinheit (211) ein Benachrichtigungssignal an das Eingabe-/Ausgabemodul (112_1 bis 112_M, 122_1 bis 122_N, und 220) sendet, so dass das Verarbeitungsmodul (111, 210) und das Eingabe-/Ausgabemodul (112_1 bis 112_M, 122_1 bis 122_N, und 220) Zertifikate voneinander erhalten,
wobei das Verarbeitungsmodul (111, 210) und das Eingabe-/Ausgabemodul (112_1 bis 112_M, 122_1 bis 122_N, und 220) die Zertifikate voneinander auf der Grundlage eines gegenseitigen Transportschicht-Sicherheitskommunikationsprotokolls erhalten, um Vertrauen aufzubauen.

3. Fernendgeräteinheit (110) nach Anspruch 2, wobei die erste Verarbeitungseinheit (211) das Benachrichtigungssignal an das Eingabe-/Ausgabemodul (112_1 bis 112_M, 122_1 bis 122_N und 220) über ein Verbindungsschicht-Ermittlungsprotokoll (LLDP) sendet,
wobei das Benachrichtigungssignal organisationsspezifische Informationen des Verbindungsschicht-Ermittlungsprotokolls umfasst.

4. Fernendgeräteinheit (110) nach Anspruch 2 oder 3, wobei, als Reaktion darauf, dass das Verarbeitungsmodul (111, 210) und das Eingabe-/Ausgabemodul (112_1 bis 112_M, 122_1 bis 122_N, und 220) die Zertifikate voneinander erhalten, die erste Verarbeitungseinheit (211) ein Verarbeitungsmodulzertifikat (412) an das Eingabe-/Ausgabemodul (112_1 bis 112_M, 122_1 bis 122_N, und 220) sendet und ein Eingabe-/Ausgabemodulzertifikat (413) empfängt, das von dem Eingabe-/Ausgabemodul (112_1 bis 112_M, 122_1 bis 122_N und 220) gesendet wurde, um das Eingabe-/Ausgabemodulzertifikat (413) in der ersten Speichereinheit (212) zu speichern, und eine zweite Verarbeitungseinheit (221) des Eingabe-/Ausgabemoduls (112_1 bis 112_M, 122_1 bis 122_N und 220) das Verarbeitungsmodulzertifikat (412) empfängt, das von dem Verarbeitungsmodul (111, 210) gesendet wurde, um das Verarbeitungsmodulzertifikat (412) in einer zweiten Speichereinheit (222) des Eingabe-/Ausgabemoduls (112_1 bis 112_M, 122_1 bis 122_N und 220) zu speichern.

5. Fernendgeräteinheit (110) nach Anspruch 4, wobei als Reaktion darauf, dass die erste Verarbeitungseinheit (211) im Betriebsmodus arbeitet, die erste Verarbeitungseinheit (211) erste Handshake-Daten (414) an das Eingabe-/Ausgabemodul (112_1 bis 112_M, 122_1 bis 122_N, und 220) sendet und zweite Handshake-Daten (424) von dem Eingabe-/Ausgabemodul (112_1 bis 112_M, 122_1 bis 122_N, und 220) empfängt,
wobei die erste Verarbeitungseinheit (211) die zweiten Handshake-Daten (424) gemäß einem ersten geheimen Schlüssel entschlüsselt, der in der ersten Speichereinheit (212) gespeichert ist, und mit dem in der ersten Speichereinheit (212) gespeicherten Eingabe-/Ausgabemodulzertifikat (422) verifiziert, um zu bestätigen, ob eine Kommunikationsverbindung (401) mit dem Eingabe-/Ausgabemodul (112_1 bis 112_M, 122_1 bis 122_N und 220) aufgebaut ist,
wobei die zweite Verarbeitungseinheit (221) des Eingabe-/Ausgabemoduls (112_1 bis 112_M, 122_1 bis 122_N und 220) die ersten Handshake-Daten (414) gemäß einem zweiten geheimen Schlüssel, der in der zweiten Speichereinheit (222) gespeichert ist, entschlüsselt und mit dem Verarbeitungsmodulzertifikat (423), das in der zweiten Speichereinheit (222) gespeichert ist, verifiziert, um zu bestätigen, ob die Kommunikationsverbindung (401) mit dem Verarbeitungsmodul (111, 210) aufgebaut ist.

6. Fernendgeräteinheit (110) nach Anspruch 1, wobei die Auslöseeinheit (213) ein physischer Knopf ist.

7. Fernendgeräteinheit (110) nach Anspruch 1, wobei die Auslöseeinheit (213) eine virtuelle Taste ist und durch eine entfernte Netzwerkschnittstelle oder ein Netzwerkmanagementtool aus der Ferne aktiviert oder deaktiviert wird.

8. Fernendgeräteinheit (110) nach irgendeinem der Ansprüche 1 bis 7, wobei die Fernendgeräteinheit (110) ferner das Eingabe-/Ausgabemodul (112_1 bis 112_M, 122_1 bis 122_N und 220) umfasst.

9. Fernendgeräteinheit (110) nach irgendeinem der Ansprüche 1 bis 8, wobei das Eingabe-/Ausgabemodul (122_1 bis 122_N) in einer Erweiterungsvorrichtung (120) angeordnet ist.

10. Authentifizierungsverfahren einer Fernendgeräteinheit (110), wobei die Fernendgeräteinheit (110) ein Verarbeitungsmodul (111, 210) umfasst, wobei das Authentifizierungsverfahren umfasst:
als Reaktion darauf, dass eine Auslöseeinheit (213) aktiviert ist, Betreiben einer ersten Verarbeitungseinheit (211) des Verarbeitungsmoduls (111, 210) in einem Bereitstellungsmodus, um einem Eingabe-/Ausgabemodul (112_1 bis 112_M, 122_1 bis 122_N, und 220) und dem Verarbeitungsmodul (111, 210) zu ermöglichen, Vertrauen aufzubauen; und
wobei das Verfahren **dadurch gekennzeichnet ist, dass**, als Reaktion darauf, dass die Auslöseeinheit (213) deaktiviert ist, die erste Verarbeitungseinheit (211) des Verarbeitungsmoduls (111, 210) in einem Betriebsmodus betrieben wird, um zu verhindern, dass ein anderes Eingabe-/Ausgabemodul, das noch kein Vertrauen aufgebaut hat, sich mit dem Verarbeitungsmodul (111, 210) verbindet,
und dass die Auslöseeinheit (213) in dem Verarbeitungsmodul (111, 210) angeordnet ist.

11. Authentifizierungsverfahren nach Anspruch 10, wobei der Schritt des Betreibens der ersten Verarbeitungseinheit (211) des Verarbeitungsmoduls (111, 210) in dem Bereitstellungsmodus umfasst:
als Reaktion darauf, dass die erste Verarbeitungseinheit (211) im Bereitstellungsmodus betrieben wird, Senden eines Benachrichtigungssignals an das Eingabe-/Ausgabemodul (112_1 bis 112_M, 122_1 bis 122_N, und 220) durch die erste Verarbeitungseinheit (211), so dass das Verarbeitungsmodul (111, 210) und das Eingabe-/Ausgabemodul (112_1 bis 112_M, 122_1 bis 122_N, und 220) Zertifikate voneinander erhalten,
wobei das Verarbeitungsmodul (111, 210) und das Eingabe-/Ausgabemodul (112_1 bis 112_M, 122_1 bis 122_N, und 220) die Zertifikate voneinander auf der Grundlage eines gegenseitigen Transportschicht-Sicherheitskommunikationsprotokolls erhalten, um Vertrauen aufzubauen.

12. Authentifizierungsverfahren nach Anspruch 11, wobei die erste Verarbeitungseinheit (211) das Benachrichtigungssignal an das Eingabe-/Ausgabemodul (112_1 bis 112_M, 122_1 bis 122_N und 220) und über ein Verbindungsschicht-Ermittlungsprotokoll sendet, wobei das Benachrichtigungssignal organisationsspezifische Informationen des Verbindungsschicht-Ermittlungsprotokolls umfasst.

13. Authentifizierungsverfahren nach Anspruch 12, wobei der Schritt, bei dem das Verarbeitungsmodul (111, 210) und das Eingabe-/Ausgabemodul (112_1 bis 112_M, 122_1 bis 122_N und 220) die Zertifikate voneinander erhalten, umfasst:
Senden eines Verarbeitungsmodulzertifikats (412) an das Eingabe-/Ausgabemodul (112_1 bis 112_M, 122_1 bis 122_N und 220) durch die erste Verarbeitungseinheit (211) des Verarbeitungsmoduls (111, 210);
Empfangen des von dem Verarbeitungsmodul (111, 210) gesendeten Verarbeitungsmodulzertifikats (412) durch eine zweite Verarbeitungseinheit (221) des Eingabe-/Ausgabemoduls (112_1 bis 112_M, 122_1 bis 122_N und 220), um das Verarbeitungsmodulzertifikat (412) in einer zweiten Speichereinheit (222) des Eingabe-/Ausgabemoduls (112_1 bis 112_M, 122_1 bis 122_N und 220) zu speichern;
Senden eines Eingabe-/Ausgabemodulzertifikats (413) an das Verarbeitungsmodul (111, 210) durch die zweite Verarbeitungseinheit (221) des Eingabe-/Ausgabemoduls (112_1 bis 112_M, 122_1 bis 122_N und 220); und
Empfangen des von dem Eingabe-/Ausgabemodul (112_1 bis 112_M, 122_1 bis 122_N und 220) gesendeten Eingabe-/Ausgabemodulzertifikats (422) durch die erste Verarbeitungseinheit (211) des Verarbeitungsmoduls (111, 210), um das Eingabe-/Ausgabemodulzertifikat (422) in einer ersten Speichereinheit (212) des Verarbeitungsmoduls (111, 210) zu speichern.

14. Authentifizierungsverfahren nach Anspruch 13, wobei als Reaktion auf das Betreiben der ersten Verarbeitungseinheit (211) im Betriebsmodus das Authentifizierungsverfahren ferner umfasst:
Senden erster Handshake-Daten (414) an das Eingabe-/Ausgabemodul (112_1 bis 112_M, 122_1 bis 122_N und 220) durch die erste Verarbeitungseinheit (211) des Verarbeitungsmoduls (111, 210) und Empfangen zweiter Handshake-Daten (424) von dem Eingabe-/Ausgabemodul (112_1 bis 112_M, 122_1 bis 122_N und 220); und
Entschlüsseln der zweiten Handshake-Daten (424) gemäß einem ersten geheimen Schlüssel, der in der ersten Speichereinheit (212) gespeichert ist, durch die erste Verarbeitungseinheit (211) des Verarbeitungsmoduls (111, 210), und Verifizieren mit dem Eingabe-/Ausgabemodulzertifikat (422), das in der ersten Speichereinheit (212) gespeichert ist, um zu bestätigen, ob eine Kommunikationsverbindung (401) mit dem Eingabe-/Ausgabemodul (112_1 bis 112_M, 122_1 bis 122_N, und 220) aufgebaut ist; und
Entschlüsseln der ersten Handshake-Daten (414) gemäß einem zweiten geheimen Schlüssel, der in der zweiten Speichereinheit (222) gespeichert ist, durch die zweite Verarbeitungseinheit (221) des Eingabe-/Ausgabemoduls (112_1 bis 112_M, 122_1 bis 122_N, und 220), und Verifizieren mit dem Verarbeitungsmodulzertifikat (423), das in der zweiten Speichereinheit (222) gespeichert ist, um zu bestätigen, ob die Kommunikationsverbindung (401) mit dem Verarbeitungsmodul (111, 210) aufgebaut ist.

15. Kommunikationssystem (100), umfassend:
eine Fernendgeräteinheit (110) nach irgendeinem der Ansprüche 1 bis 9, die ein Verarbeitungsmodul (111, 210) umfasst; und
eine Erweiterungsvorrichtung (120), die ein Eingabe-/Ausgabemodul (112_1 bis 112_M, 122_1 bis 122_N, und 220) umfasst und mit der Fernendgeräteinheit (110) gekoppelt ist,
wobei als Reaktion darauf, dass eine Auslöseeinheit (213) des Verarbeitungsmoduls (111, 210) aktiviert wird, das Verarbeitungsmodul (111, 210) in einem Bereitstellungsmodus arbeitet, um es dem Eingabe-/Ausgabemodul (112_1 bis 112_M, 122_1 bis 122_N und 220) und dem Verarbeitungsmodul (111, 210) zu ermöglichen, Vertrauen aufzubauen,
wobei das Kommunikationssystem (100) **dadurch gekennzeichnet ist, dass** als Reaktion darauf, dass die Auslöseeinheit (213) deaktiviert ist, das Verarbeitungsmodul (111, 210) in einem Betriebsmodus arbeitet, um zu verhindern, dass sich ein anderes Eingabe-/Ausgabemodul (112_1 bis 112_M, 122_1 bis 122_N und 220), das noch kein Vertrauen aufgebaut hat, mit dem Verarbeitungsmodul (111, 210) verbindet,
und dass die Auslöseeinheit (213) in dem Verarbeitungsmodul (111, 210) angeordnet ist.

## Revendications

1. Une unité terminale distante (110), comprenant :
un module de traitement (111, 210), comprenant :
une première unité de traitement (211) ; et
une première unité de stockage (212), reliée à la première unité de traitement (211),
la première unité de traitement (211), en réponse à l'activation d'une unité de déclenchement (213), fonctionnant en mode de fourniture pour permettre à un module d'entrée/sortie (112_1 à 112_M, 122_1 à 122_N et 220) et au module de traitement (111, 210) d'établir une relation de confiance,
l'unité terminale distante (110) étant **caractérisée en ce que**, en réponse à la désactivation de l'unité de déclenchement (213), la première unité de traitement (211) fonctionne en mode d'exécution pour empêcher un autre module d'entrée/sortie, qui n'a pas encore établi de relation de confiance, de se connecter au module de traitement (111, 210),
et **en ce que** l'unité de déclenchement (213) est placée dans le module de traitement (111, 210).

2. L'unité terminale distante (110) selon la revendication 1, dans laquelle, en réponse au fait que la première unité de traitement (211) fonctionne en mode de fourniture, la première unité de traitement (211) envoie un signal de notification au module d'entrée/sortie (112_1 à 112_M, 122_1 à 122_N et 220), de sorte que le module de traitement (111, 210) et le module d'entrée/sortie (112_1 à 112_M, 122_1 à 122_N et 220) obtiennent des certificats l'un de l'autre,
le module de traitement (111, 210) et le module d'entrée/sortie (112_1 à 112_M, 122_1 à 122_N et 220) obtenant les certificats l'un de l'autre sur la base d'un protocole mutuel de communication de sécurité de couche de transport, afin d'établir la relation de confiance.

3. L'unité terminale distante (110) selon la revendication 2, dans laquelle la première unité de traitement (211) envoie le signal de notification au module d'entrée/sortie (112_1 à 112_M, 122_1 à 122_N et 220) via un protocole de découverte de couche de liaison (LLDP),
le signal de notification comprenant des informations spécifiques à l'organisation du protocole de découverte de couche de liaison.

4. L'unité terminale distante (110) selon la revendication 2 ou la revendication 3, dans laquelle, en réponse au fait que le module de traitement (111, 210) et le module d'entrée/sortie (112_1 à 112_M, 122_1 à 122_N et 220) obtiennent les certificats les uns des autres, la première unité de traitement (211) envoie un certificat (412) de module de traitement au module d'entrée/sortie (112_1 à 112_M, 122_1 à 122_N et 220) et reçoit un certificat (413) de module d'entrée/sortie envoyé par le module d'entrée/sortie (112_1 à 112_M, 122_1 à 122_N et 220) afin de stocker le certificat (413) de module d'entrée/sortie dans la première unité de stockage (212), et une deuxième unité de traitement (221) du module d'entrée/sortie (112_1 à 112_M, 122_1 à 122_N et 220) reçoit le certificat (412) de module de traitement envoyé par le module de traitement (111, 210) afin de stocker le certificat (412) de module de traitement dans une deuxième unité de stockage (222) du module d'entrée/sortie (112_1 à 112_M, 122_1 à 122_N et 220).

5. L'unité terminale distante (110) selon la revendication 4, dans laquelle, en réponse au fait que la première unité de traitement (211) fonctionne en mode d'exécution, la première unité de traitement (211) envoie au module d'entrée/sortie (112_1 à 112_M, 122_1 à 122_N et 220) des premières données d'établissement de liaison (414), en anglais "*handshake data*", et reçoit des deuxièmes données d'établissement de liaison (424) en provenance du module d'entrée/sortie (112_1 à 112_M, 122_1 à 122_N et 220),
la première unité de traitement (211) décrypte les deuxièmes données d'établissement de liaison (424) conformément à une première clé secrète stockée dans la première unité de stockage (212), et vérifie avec le certificat (422) de module d'entrée/sortie stocké dans la première unité de stockage (212) pour confirmer si une connexion de communication (401) est établie avec le module d'entrée/sortie (112_1 à 112_M, 122_1 à 122_N et 220),
la deuxième unité de traitement (221) du module d'entrée/sortie (112_1 à 112_M, 122_1 à 122_N et 220) décryptant les premières données d'établissement de liaison (414) conformément à une deuxième clé secrète stockée dans la deuxième unité de stockage (222), et opérant une vérification avec le certificat (423) de module de traitement stocké dans la deuxième unité de stockage (222) pour confirmer que la connexion de communication (401) est établie avec le module de traitement (111, 210).

6. L'unité terminale distante (110) selon la revendication 1, dans laquelle l'unité de déclenchement (213) est un bouton physique.

7. L'unité terminale distante (110) selon la revendication 1, dans laquelle l'unité de déclenchement (213) est un bouton virtuel et est activée ou désactivée à distance par une interface réseau distante ou un outil de gestion de réseau.

8. L'unité terminale distante (110) selon l'une quelconque des revendications 1 à 7, l'unité terminale distante (110) comprenant en outre le module d'entrée/sortie (112_1 à 112_M, 122_1 à 122_N et 220).

9. L'unité terminale distante (110) selon l'une quelconque des revendications 1 à 8, dans laquelle le module d'entrée/sortie (122_1 à 122_N) est placé dans un dispositif d'extension (120).

10. Un procédé d'authentification d'une unité terminale distante (110), dans lequel l'unité terminale distante (110) comprend un module de traitement (111, 210), le procédé d'authentification comprenant :
en réponse à l'activation d'une unité de déclenchement (213), le fait de faire fonctionner une première unité de traitement (211) du module de traitement (111, 210) dans un mode de fourniture pour permettre à un module d'entrée/sortie (112_1 à 112_M, 122_1 à 122_N et 220) et au module de traitement (111, 210) d'établir une relation de confiance ; et
le procédé étant **caractérisé par** le fait, en réponse au fait que l'unité de déclenchement (213) est désactivée, de faire fonctionner la première unité de traitement (211) du module de traitement (111, 210) dans un mode d'exécution pour empêcher un autre module d'entrée/sortie, qui n'a pas encore établi de relation de confiance, de se connecter au module de traitement (111, 210),
et par le fait que l'unité de déclenchement (213) est placée dans le module de traitement (111, 210).

11. Le procédé d'authentification selon la revendication 10, dans lequel l'étape consistant à faire fonctionner la première unité de traitement (211) du module de traitement (111, 210) dans le mode de fourniture comprend :
en réponse au fait que la première unité de traitement (211) fonctionne en mode de fourniture, le fait, par la première unité de traitement (211), d'envoyer un signal de notification au module d'entrée/sortie (112_1 à 112_M, 122_1 à 122_N et 220), de sorte que le module de traitement (111, 210) et le module d'entrée/sortie (112_1 à 112_M, 122_1 à 122_N et 220) obtiennent les certificats l'un de l'autre,
le module de traitement (111, 210) et le module d'entrée/sortie (112_1 à 112_M, 122_1 à 122_N et 220) obtenant les certificats l'un de l'autre sur la base d'un protocole mutuel de communication de sécurité de couche de transport afin d'établir la relation de confiance.

12. Le procédé d'authentification selon la revendication 11, dans lequel la première unité de traitement (211) envoie le signal de notification au module d'entrée/sortie (112_1 à 112_M, 122_1 à 122_N et 220) par l'intermédiaire d'un protocole de découverte de couche de liaison, le signal de notification comprenant des informations spécifiques à l'organisation du protocole de découverte de couche de liaison.

13. Le procédé d'authentification selon la revendication 12, dans lequel l'étape consistant, pour le module de traitement (111, 210) et le module d'entrée/sortie (112_1 à 112_M, 122_1 à 122_N et 220), à obtenir les certificats l'un de l'autre comprend :
le fait, par la première unité de traitement (211) du module de traitement (111, 210), d'envoyer un certificat (412) de module de traitement au module d'entrée/sortie (112_1 à 112_M, 122_1 à 122_N et 220) ;
le fait, par une deuxième unité de traitement (221) du module d'entrée/sortie (112_1 à 112_M, 122_1 à 122_N et 220), de recevoir le certificat (412) de module de traitement envoyé par le module de traitement (111, 210), afin de stocker le certificat (412) de module de traitement dans une deuxième unité de stockage (222) du module d'entrée/sortie (112_1 à 112_M, 122_1 à 122_N et 220) ;
le fait, par la deuxième unité de traitement (221) du module d'entrée/sortie (112_1 à 112_M, 122_1 à 122_N et 220), d'envoyer un certificat (413) de module d'entrée/sortie au module de traitement (111, 210) ; et
le fait, par la première unité de traitement (211) du module de traitement (111, 210), de recevoir le certificat (422) de module d'entrée/sortie envoyé par le module d'entrée/sortie (112_1 à 112_M, 122_1 à 122_N et 220) afin de stocker le certificat (422) de module d'entrée/sortie dans une première unité de stockage (212) du module de traitement (111, 210).

14. Le procédé d'authentification selon la revendication 13, comprenant en outre, en réponse au fait que la première unité de traitement (211) fonctionne en mode d'exécution :
le fait, par la première unité de traitement (211) du module de traitement (111, 210), d'envoyer des premières données d'établissement de liaison (414) au module d'entrée/sortie (112_1 à 112_M, 122_1 à 122_N et 220), et de recevoir des deuxièmes données d'établissement de liaison (424), en anglais "*handshake data*", en provenance du module d'entrée/sortie (112_1 à 112_M, 122_1 à 122_N et 220) ; et
le fait, par la première unité de traitement (211) du module de traitement (111, 210), de décrypter les deuxièmes données d'établissement de liaison (424) conformément à une première clé secrète stockée dans la première unité de stockage (212), et d'opérer une vérification avec le certificat (422) de module d'entrée/sortie stocké dans la première unité de stockage (212) pour confirmer qu'une connexion de communication (401) est établie avec le module d'entrée/sortie (112_1 à 112_M, 122_1 à 122_N et 220) ; et
le fait, par la deuxième unité de traitement (221) du module d'entrée/sortie (112_1 à 112_M, 122_1 à 122_N et 220), de décrypter les premières données d'établissement de liaison (414) conformément à une deuxième clé secrète stockée dans la deuxième unité de stockage (222), et d'opérer une vérification avec le certificat (423) de module de traitement stocké dans la deuxième unité de stockage (222) pour confirmer que la connexion de communication (401) est établie avec le module de traitement (111, 210).

15. Un système de communication (100), comprenant :
une unité terminale distante (110) selon l'une quelconque des revendications 1 à 9, comprenant un module de traitement (111, 210) ; et
un dispositif d'extension (120), comprenant un module d'entrée/sortie (112_1 à 112_M, 122_1 à 122_N et 220) et relié à l'unité terminale distante (110),
le module de traitement (111, 210), en réponse à l'activation d'une unité de déclenchement (213) du module de traitement (111, 210), fonctionnant dans un mode de fourniture pour permettre au module d'entrée/sortie (112_1 à 112_M, 122_1 à 122_N et 220) et au module de traitement (111, 210) d'établir une relation de confiance,
le système de communication (100) étant **caractérisé en ce que**, en réponse à la désactivation de l'unité de déclenchement (213), le module de traitement (111, 210) fonctionne dans un mode d'exécution pour empêcher un autre module d'entrée/sortie (112_1 à 112_M, 122_1 à 122_N et 220), qui n'a pas encore établi de relation de confiance, de se connecter au module de traitement (111, 210),
et **en ce que** l'unité de déclenchement (213) est placée dans le module de traitement (111, 210).
